# EUROPEAN PATENT SPECIFICATION

(11) **EP 4 759 949 B1**
(45) Date of publication and mention of the grant of the patent: **21.10.2026**
(21) Application number: 25197668.4
(22) Date of filing: 22.08.2025
(51) Int. Cl.: C22C 9/00, B22D 11/00, C22B 7/00, C22B 9/00, C22B 15/00, C22B 9/05, C22B 15/02, B22D 11/20, B22D 11/22

(54) **METHOD FOR PREPARING A CORROSION-RESISTANT COPPER PIPE BY UTILIZING RECYCLED COPPER AND THE CORROSION-RESISTANT COPPER PIPE PREPARED BY THE METHOD**
VERFAHREN ZUR HERSTELLUNG EINES KORROSIONSBESTÄNDIGEN KUPFERROHRS UNTER VERWENDUNG VON RECYCLINGKUPFER UND DURCH DAS VERFAHREN HERGESTELLTES KORROSIONSBESTÄNDIGES KUPFERROHR
PROCÉDÉ DE PRÉPARATION D'UN TUYAU EN CUIVRE RÉSISTANT À LA CORROSION À L'AIDE DE CUIVRE RECYCLÉ ET TUYAU EN CUIVRE RÉSISTANT À LA CORROSION PRÉPARÉ PAR LE PROCÉDÉ

(30) Priority: 10.12.2024 CN 202411806731
(43) Date of publication of application: 17.06.2026
(73) Proprietor: Zhejiang Hailiang Co., Ltd., Zhejiang Province 311835 (CN); Zhejiang Copper Processing Research Institute Co., Ltd., Zhuji, Zhejiang 311835 (CN)
(72) Inventor: XU, Gaolei, Zhuji City, CN-311835 (CN); GAO, Jingbo, Zhuji City, CN-311835 (CN); CAO, Jianguo, Zhuji City, CN-311835 (CN); DONG, Zhiqiang, Zhuji City, CN-311835 (CN); ZHAO, Xuelong, Zhuji City, CN-311835 (CN); FAN, Zhen, Zhuji City, CN-311835 (CN); ZHANG, Zhen, Zhuji City, CN-311835 (CN); WANG, Xingdong, Zhuji City, CN-311835 (CN)
(74) Representative: ABG Intellectual Property Law, S.L.

(56) References cited:
- EP-B1- 3 418 407
- CN-A- 114 561 554
- LI ET AL: "Continuous casting of copper tube billets under rotating electromagnetic field", MATERIALS SCIENCE, ELSEVIER, AMSTERDAM, NL, vol. 460-461, 7 May 2007 (2007-05-07), pages 648 - 651, XP022041627, ISSN: 0921-5093, DOI: 10.1016/J.MSEA.2007.01.078
- SANDSTR?M ROLF: "The role of hydrogen in copper", 27 January 2014 (2014-01-27), pages 1 - 16, XP093341120, Retrieved from the Internet <URL:https://skb.se/wp-content/uploads/2015/05/1420051-PM-The-role-of-hydrogen-in-copper.pdf?utm_source=chatgpt.com> [retrieved on 20251127]

## Description

### Technical Field

### Technical Field

The present application relates to the field of copper processing, and in particular, to a method for preparing a corrosion-resistant copper pipe by utilizing recycled copper and the corrosion-resistant copper pipe prepared by the method.

### Background Art

Copper pipes are widely used in marine equipment, aerospace, nuclear power, high-end equipment and refrigeration fields. Raw material copper for the copper pipes is mainly derived from mine exploitation. Copper ore is extracted from mines, and electrolytic copper is obtained through beneficiation and smelting. Electrolytic copper, especially electrolytic copper with a purity higher than 99.9%, is used as raw material to prepare copper pipes. In order to reduce dependence on natural resources and reduce the environmental pressure while providing a sustainable source of material, it is possible to produce oxygen-free copper pipes by recycling and reusing copper from scrapped wires and cables, automobile heat sinks and refrigerators, copper-containing castings, waste bearings, waste motors, waste transformers, etc.

However, compared with the traditional copper derived from the copper ore, the recycled copper has oxygen element, hydrogen element, and other element such as arsenic element, antimony element, bismuth element, iron element, lead element, tin element, nickel element, zinc element, and sulfur element, while the oxygen element, hydrogen element and other elements are all impurities in the oxygen-free copper pipes, thus additional purification steps are required to remove impurities to achieve the same quality standard as the oxygen-free copper pipe produced by the traditional copper. It can be seen that the preparation process of copper pipes is inevitably different depending on the raw materials of copper pipes. Compared with electrolytic copper, recycled copper has a wider variety and higher content of impurities, and the performance of the copper will deteriorate after being used. Therefore, it is more difficult to prepare copper pipes by utilizing recycled copper.

For this reason, the related art, such as the Chinese invention patent CN103725897A, discloses a method for directly producing high-purity oxygen-free copper by continuous refining of waste copper using the fire process. In this method, borides and rare earths are added for hydrogen removal and deoxygenation, after removing impurities through redox. But the method will introduce other impurities such as borides and rare earths, and the residues of borides and rare earths affect the composition of oxygen-free copper pipes. To this end, currently, the reducing gas is mostly used to reduce oxygen element during the production of copper raw materials to generate oxygen-free copper pipes. For example, the Chinese utility model patent CN216780264U discloses a shaft furnace-horizontal continuous casting apparatus for copper casting billet, which produces pipe billets by using equipment such as a shaft furnace, a refining furnace, a mixing furnace, a holding furnace and a seven-flow continuous casting furnace, wherein gas-blowing bricks are provided at the bottom wall of the cavity of the refining furnace body. The reducing gas is blown in through the gas-blowing device. The content of oxygen element in the regenerated copper pipe is removed by increasing the amount of reducing gas. Phosphorus copper is added to remove impurities such as oxygen element. However, the inventor of the present application noted that the above device only introduced gas into the refining furnace, which cannot accurately control the content of oxygen element and affects the quality of the regenerated copper pipe.

At the same time, in order to improve the heat exchange efficiency of the copper pipe and reduce the energy consumption, copper pipes used in heat exchangers in aerospace, etc. are developing towards thinner walls and finer diameters. Thin walls make copper pipes be more easily corroded and perforated. In the related art, Chinese invention patent CN105143478A discloses a corrosion-resistant copper pipe, wherein P is contained in a ratio of 0.05 to 1.0 weight percent, and the rest is composed of Cu and unavoidable impurities. However, the inventor of the present application realizes that on the one hand, the content of phosphorus in the corrosion-resistant copper pipe is relatively high, so that the copper pipe becomes brittle and hard, which may cause cracks during the bending or molding process; on the other hand, if hydrogen element and oxygen element in the copper pipes are not eliminated, the contents of hydrogen element and oxygen element are high, resulting in a large amount of cuprous oxide in the copper pipes, high potential difference between grain boundaries and grain interiors, poor resistance to ant hole corrosion, and easy corrosion of the copper pipes.

In addition, Chinese invention patent CN114561554A relates to a vertical shaft furnace-based copper billet horizontal continuous casting apparatus and process. A reducing atmosphere is maintained in the vertical shaft furnace for melting copper, while phosphorus copper is used for deoxidation and impurity removal; patent EP3418407B1 discloses a process for producing a copper tube which is highly resistant to ant nest corrosion, comprising: a step of adding a phosphorus source material to the melted copper source material in a plurality of separate additions, so as to prepare a copper molten metal containing phosphorus in said amount, etc.; LI ET AL: "Continuous casting of copper tube billets under rotating electromagnetic field" relates to effects of input coil current intensity on the structure, tensile strength and surface quality of copper tube billets continuously cast with the application of a rotating electromagnetic field outside the mold; Rolf Sandström: "The role of hydrogen in copper" concerns effects of hydrogen on copper materials, especially in the context of spent nuclear fuel planning to be disposed of by encapsulation in cast iron inserts placed within copper shells. The role of the cast iron is to be load bearing, and the copper shell gives protection against corrosion from the outside.

### Disclosure

An object of the present application is to provide a method for preparing a corrosion-resistant copper pipe by utilizing recycled copper, which overcomes the shortcomings of the related art and improves the corrosion resistance of the corrosion-resistant copper pipe.

**In** order to achieve the above object, the present application adopts the following technical solution: a method for preparing a corrosion-resistant copper pipe by utilizing recycled copper includes:
S1: heating a copper liquid derived from recycled copper in a shaft furnace to a set temperature, adjusting a concentration of a reducing gas in the shaft furnace to increase an oxygen element content of the copper liquid in the shaft furnace to be greater than 30 ppm, and carrying out primary impurity removal;
S2: introducing the copper liquid in the shaft furnace sequentially into a chute, a refining furnace, a holding furnace, and a casting furnace, with the temperature of the copper liquid in the chute, the refining furnace, the holding furnace, and the casting furnace decreasing sequentially, introducing an inert gas and the reducing gas into the chute, the refining furnace, the holding furnace, and the casting furnace, with the flow rate and pressure of the inert gas and the reducing gas introduced into the chute, the refining furnace, the holding furnace, and the casting furnace decreasing sequentially, and carrying out secondary impurity removal;
S3: adding a phosphorus source into the copper liquid in the casting furnace, with a casting temperature of the copper liquid of 1165°C±5°C and a primary cooling water flow rate of a crystallizer of 45 L/min to 55 L/min, adopting a traction process, in which an initial casting traction speed is 100 mm/min, turning on secondary cooling water after pulling out the ingot, gradually increasing the casting traction speed within a range of 100 mm/min to 350 mm/min, and obtaining a corrosion-resistant copper pipe.

With the above technical solution, the present application has the following advantages: firstly, the oxygen element has oxidation property, so that the oxygen element may react with the hydrogen element in the impurity to generate water through a redox reaction. The copper liquid in the shaft furnace is heated to the set temperature, and the higher temperature of the copper liquid may provide sufficient activation energy to promote the reaction rate to be higher. The generated water may also be heated to evaporate in the form of water vapor, so that the content of the hydrogen element in the copper liquid may be reduced. Meanwhile, the oxygen element may also react with other elements other than hydrogen element in impurities to generate oxides through an oxidation reaction, which are usually insoluble in the copper liquid but form slag phase. The slag phase may be removed from the surface of copper liquid by slag scraping, thereby reducing the impurities content in copper liquid. The oxygen element itself is the impurity that needs to be removed in the copper liquid, and no other impurity removal agent is introduced, so that the types of impurities in the copper liquid will not increase. Therefore, by reverse operation, the oxygen element content of the copper liquid in the shaft furnace may be increased first, and the oxygen element content of the copper liquid is increased to be greater than 30 ppm, which may provide enough oxygen element for oxidation reaction with impurities to carry out primary impurity removal and ensure the removal effect of impurities. If the oxygen element content of the copper liquid in the shaft furnace is lower than 30 ppm, the impurity removal effect is poor, resulting in a high impurity content in the copper liquid, which increases the difficulty of impurity removal in the subsequent processing steps, and if the impurity removal ability in the subsequent processing steps is weak, it may lead to impurities in the final generated oxygen-free copper pipe still being higher than the target value, affecting the quality of the oxygen-free copper pipe.

Secondly, since the reducing gas has reducing property, the reducing gas may react with the oxygen element in the impurity to generate the oxygen-containing gas through a reduction reaction. The oxygen-containing gas is volatile, so that the content of the oxygen element in the copper liquid may be reduced. Meanwhile, the reducing gas may also react with other elements except the oxygen element in the impurities to generate substances separable from the copper liquid through the reduction reaction, so as to further reduce the impurities content, while the temperature of the copper liquid is high, and the impurities will still undergo redox reaction with the oxygen element, generating oxides and removing from the copper liquid. Moreover, since the high concentration of the reducing gas is easy to form an explosive mixture when being mixed with air, the inert gas and reducing gas are introduced into the chute, the refining furnace, the holding furnace, and the casting furnace. The addition of inert gas may reduce the flammability range of this mixture and reduce the potential safety hazard. The addition of the inert gas may also increase the total amount of the gas, thereby improving the speed of gas passing through the copper liquid and helping to improve the reaction efficiency. Moreover, impurities in the copper liquid are gradually reduced by the reducing gas as they pass through the chute, the refining furnace, the holding furnace, and the casting furnace in sequence. The copper liquid undergoes multi-step impurity removal to achieve precise control of the hydrogen removal and deoxygenation process, achieving secondary impurity removal and better controlling the impurities content in the copper liquid. Moreover, the temperature of the copper liquid in the chute, the refining furnace, the holding furnace and the casting furnace decreases sequentially. As the temperature of the copper liquid decreases, the solubility of impurities decreases, and the impurities tend to precipitate out of the copper liquid and react with oxygen element to form slag phases which are easy to separate, so that impurities may be removed more thoroughly and the purity of the oxygen-free copper pipe is improved. The content of impurities will decrease when entering the next furnace after being removed in the previous furnace. Correspondingly, the required amount of the reducing gas may also be reduced, so that the flow rate and pressure of the inert gas and the reducing gas introduced into the chute, the refining furnace, the holding furnace, and the casting furnace sequentially decrease. The flow rate and pressure of the inert gas and the reducing gas which are sequentially decreased may help control the bubble overflow in the copper liquid, reduce the formation of gas pores, and also ensure that the effect of hydrogen removal and deoxygenation is within the set range throughout, and also help to control the stirring degree of the copper liquid, thereby ensuring the effective progress of the oxidation to form slag, improving the quality of oxygen-free copper pipe produced by the recycled copper, reducing energy consumption and improving process efficiency.

Moreover, the casting temperature is set to 1165°C±5°C to ensure good fluidity of the copper liquid, which helps to reduce casting defects. Meanwhile, a phosphorus source is added to the copper liquid, wherein the phosphorus element may significantly improve the corrosion resistance of the corrosion-resistant copper pipe, especially when used in humid, acidic, alkaline or seawater environments. The phosphorus element may also react with the oxygen element in the copper liquid to form phosphorus oxides, which are volatile and may escape at high temperature, thereby reducing the oxygen element in the copper alloy. In addition to deoxidation, phosphorus may react with other elements in the impurities to form compounds that are easy to separate from the copper liquid, thereby further achieving the purpose of purifying the copper liquid. The control of the primary cooling water flow rate of the crystallizer may not only effectively control the cooling rate of the copper liquid, and avoid internal stress and cracks caused by too rapid cooling, but also ensure the rapid curing of the corrosion-resistant copper pipe, and improve the production efficiency. Secondly, the gradual increase slowly from the initial casting traction speed of 100 mm/min to 350 mm/min is conducive to uniform heat dissipation, reduce uneven deformation and internal stress accumulation, ensure the dimensional accuracy and surface quality of the corrosion-resistant copper pipe, facilitate the uniform plastic deformation of the material, and improve the mechanical properties and pressure resistance of the corrosion-resistant copper pipe. The method for preparing the oxygen-free copper pipe from recycled copper may effectively reduce the content of impurities in the copper liquid, thereby eliminating cuprous oxide, reducing potential difference between grain boundaries and grain interiors, and the resistance to ant hole corrosion of the corrosion-resistant copper pipe is excellent.

Another unclaimed object of the present application is to provide a corrosion-resistant copper pipe, which is prepared by the above method for preparing a corrosion-resistant copper pipe by utilizing recycled copper, and the corrosion-resistant copper pipe has the oxygen element content of less than 5 ppm, the hydrogen element content of less than 0.3 ppm, the phosphorus element content of 0.1% to 0.3%, and a balance of the copper element.

With the above technical solution, by controlling the content of oxygen element, hydrogen element and phosphorus element in the corrosion-resistant copper pipe, the content of oxygen element is less than 5 ppm and the content of hydrogen element is less than 0.3 ppm. The cuprous oxide may be effectively eliminated, and the potential difference between grain boundaries and grain interiors may be reduced, thereby significantly reducing the oxides and hydrogen embrittlement phenomenon that may cause corrosion in the corrosion-resistant copper pipe. In addition, due to the precise control of the content of phosphorus element, the phosphorus element may significantly improve the corrosion resistance of the corrosion-resistant copper pipe, especially when used in humid, acidic, alkaline or seawater environments. The appropriate phosphorus content may also ensure the strength and hardness of the corrosion-resistant copper pipe. The phosphorus element may also react with the oxygen element in the copper liquid to form phosphorus oxides, which are volatile and will escape at high temperatures, thereby reducing the amount of oxygen element in the copper alloy. In addition to deoxidation, phosphorus may also react with other elements in impurities to form compounds which are easy to separate from copper liquid, thereby further achieving the purpose of purifying copper. Secondly, the balance is copper element, which reduces the element type, ensures a relatively high copper element content, ensures good electrical conductivity and thermal conductivity of the material, and also retains the good processability of the copper itself, which is suitable for various processing processes such as molding, drawing and welding, and is convenient for manufacturing a pipe with a complex shape.

### Brief Description of Drawings

The following further describes this application with reference to the accompanying drawings.
FIG. 1 is a flowchart of a method for preparing an oxygen-free copper pipe by utilizing recycled copper according to Example 2 of the present application;
FIG. 2 is a schematic structural diagram of the apparatus for preparing an oxygen-free copper pipe by utilizing recycled copper according to Example 3 of the present application;

In the drawings: 100, a shaft furnace; 200, a chute; 300, a refining furnace; 400, a holding furnace; and 500, a casting furnace.

### Best Mode for Carrying out the Invention

To make the objects, technical solutions, and advantages of the examples of the present application clearer, the technical solutions in the examples of the present application will be clearly and completely described below with reference to the accompanying drawings in the examples of the present application, and it is obvious that the described examples are only a part of the examples of the present application, but not all the examples.

In the specification, claims, and accompanying drawings of the present application, the terms "first", "second", "third", "fourth", and the like (if existing) are intended to distinguish between similar objects but do not necessarily indicate a specific order or sequence. It should be understood that data used in this way may be interchanged under appropriate circumstances, so that the examples of the present application described herein can be implemented in an order other than those illustrated or described herein.

It should be understood that, in various examples of the present application, such as the sequence number related to each process does not mean an execution sequence, and an execution sequence of each process should be determined by its function and internal logic, and should not constitute any limitation on the implementation process of the examples of the present application.

It should be understood that, in the present application, "including" and "having" and any variations thereof are intended to cover non-exclusive inclusions, for example, a process, a method, a system, a product, or a device that includes a series of steps or units is not necessarily limited to those steps or units that are clearly listed, but may include other steps or units that are not clearly listed or inherent to the process, the method, the product, or the device.

It should be understood that in the present application, "a plurality of" means two or more. The term "and/or" is merely an association relationship describing associated objects, indicating that there may be three relationships, for example, X and/or Y may indicate three cases: X alone, X and Y simultaneously, and Y alone. The character "/" generally indicates an "or" relationship between associated objects. The terms "comprising X, Y, and Z" and "comprising X, Y, Z" mean that X, Y, and Z are all included, "comprising X, Y, or Z" means including one of X, Y, and Z, and "including X, Y, and/or Z" means including any one or two or three of X, Y, and Z.

The technical solutions of the present application are described in detail below by using specific examples. The following specific examples may be combined or replaced according to actual situation, and the same or similar concepts or processes may not be repeated in some examples.

### Example 1:

The present application provides a corrosion-resistant copper pipe, which controls the content of oxygen element, hydrogen element and phosphorus element in the corrosion-resistant copper pipe. In the corrosion-resistant copper pipe, the content of oxygen element is less than 5 ppm and the content of hydrogen element is less than 0.3 ppm. Thus, the cuprous oxide in the corrosion-resistant copper pipe produced by recycled copper may be effectively eliminated, and the potential difference between grain boundaries and grain interiors may be reduced. The content of phosphorus element is 0.1% to 0.3%, and the balance is copper element, thereby significantly reducing the oxides and hydrogen embrittlement phenomenon that may cause corrosion in the corrosion-resistant copper pipe produced by recycled copper. In addition, due to the precise control of the content of phosphorus element, the phosphorus element may significantly improve the corrosion resistance of the corrosion-resistant copper pipe, especially when used in humid, acidic, alkaline or seawater environments. The appropriate phosphorus content may also ensure the strength and hardness of the corrosion-resistant copper pipe. Secondly, the corrosion-resistant copper pipe has fewer types of impurities, ensuring a relatively high copper element content and good electrical conductivity and thermal conductivity of the material. It also retains the good processability of the copper itself, which is suitable for various processing processes such as molding, drawing and welding, and is convenient for manufacturing a pipe with a complex shape. In order to make the performance of the corrosion-resistant copper pipe: the tensile strength is not less than 250 MPa, so that the corrosion-resistant copper pipe has good resistance to tensile failure, and is suitable for applications that withstand large external forces. Secondly, the yield strength is 60 MPa to 80 MPa, which helps to improve the molding performance of the corrosion-resistant copper pipe. The elongation rate is not less than 45%, which means that the copper pipe has good plastic deformation capability, and can withstand large deformation without breaking. Then, the solid residue is not greater than 0.1 mg/m, which means that there are very few solid impurities left inside the corrosion-resistant copper pipes, which helps to improve the purity and service life of the product. In addition, the residual oil of the inner wall is not greater than 0.15 mg/m, so that the corrosion-resistant copper pipe not only has good mechanical properties, but also has excellent corrosion resistance and processing performance, and is suitable for various harsh application environments.

If the content of phosphorus element in the corrosion-resistant copper pipe is too low, the corrosion-resistant copper pipe is prone to corrosion, and if the content of phosphorus element in the corrosion-resistant copper pipe is too high, the corrosion-resistant copper pipe becomes brittle and hard, which affects its ductility and toughness, and may cause cracks during the bending or molding process. Preferably, the phosphorus element content of the corrosion-resistant copper pipe is 0.1% to 0.2%, which may reduce the phosphorus content in the corrosion-resistant copper pipe as much as possible while ensuring the resistance to ant hole corrosion of the copper pipe.

Herein, the mentioned phosphorus element content and copper element content refer to the mass ratio, which are determined by measuring and calculating the mass of phosphorus element and copper element in the corrosion-resistant copper pipe.

The corrosion depth of the Φ6.35 × 0.23 × 0.12 mm seamless internal thread corrosion-resistant copper pipe in 0.01% formic acid is less than 0.03 mm. Of course, in other sizes of corrosion-resistant copper pipes, the corrosion depth may be smaller.

### Example 2:

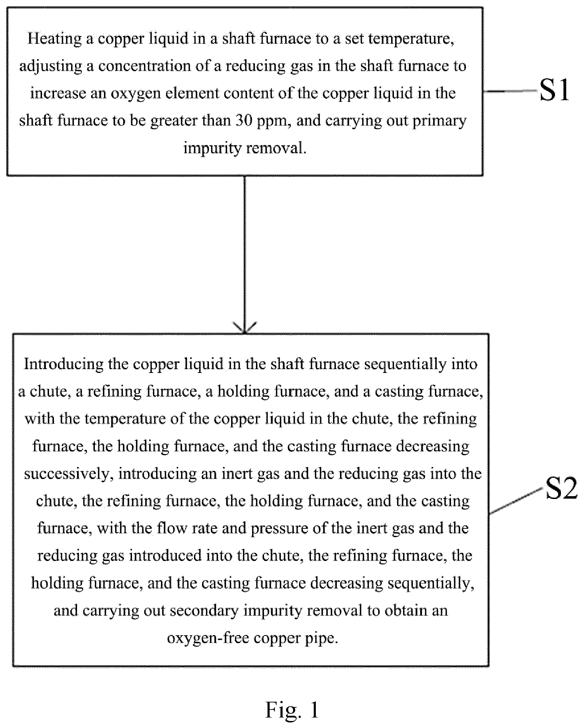

As shown in FIG. 1, the present application provides a method for preparing an oxygen-free copper pipe by utilizing recycled copper, which is mainly applicable to the processing of recycled copper material. The recycled copper mainly contains oxygen element and hydrogen element, as well as other element impurities such as arsenic element, antimony element, bismuth element, iron element, lead element, tin element, nickel element, zinc element and sulfur element. Firstly, the oxygen element has oxidation property, so that the oxygen element may react with the hydrogen element in the impurity to generate water through a redox reaction. The copper liquid in the shaft furnace is heated to the set temperature, and the higher temperature of the copper liquid may provide sufficient activation energy to promote the reaction rate to be higher. The generated water may also be heated to evaporate in the form of water vapor, so that the content of the hydrogen element in the copper liquid may be reduced. Meanwhile, the oxygen element may also react with other elements other than hydrogen element in impurities to generate oxides through an oxidation reaction, which are usually insoluble in the copper liquid but form slag phase. The slag phase may be removed from the surface of copper liquid by slag scraping, thereby reducing the impurities content in copper liquid. The oxygen element itself is the impurity that needs to be removed in the copper liquid, and no other impurity removal agent is introduced, so that the types of impurities in the copper liquid will not increase. Secondly, since the reducing gas has reducing property, the reducing gas may react with the oxygen element in the impurity to generate the oxygen-containing gas through the reduction reaction. The oxygen-containing gas is volatile, so that the content of the oxygen element in the copper liquid may be reduced. Meanwhile, the reducing gas may also react with other elements except the oxygen element in the impurities to generate substances separable from the copper liquid through the reduction reaction, so as to further reduce the impurities content, while the temperature of the copper liquid is relatively high, and the impurities will still undergo redox reaction with the oxygen element, to further reduce the impurities content. Moreover, since the high concentration of the reducing gas is easy to form an explosive mixture when being mixed with air, the addition of inert gas may reduce the flammability range of this mixture and reduce the potential safety hazard. Moreover, as the temperature of the copper liquid decreases, the solubility of impurities decreases, thus the impurities tend to precipitate out of the copper liquid and react with oxygen element to form slag phases which are easy to separate, so that impurities may be removed more thoroughly to further improve the purity of the oxygen-free copper pipe.

To this end, the method for preparing an oxygen-free copper pipe by utilizing recycled copper in this example includes:
S1: heating a copper liquid in a shaft furnace to a set temperature, adjusting a concentration of a reducing gas in the shaft furnace to increase an oxygen element content of the copper liquid in the shaft furnace to be greater than 30 ppm, and carrying out primary impurity removal;
S2: introducing the copper liquid in the shaft furnace sequentially into a chute, a refining furnace, a holding furnace, and a casting furnace, with the temperature of the copper liquid in the chute, the refining furnace, the holding furnace, and the casting furnace decreasing sequentially, introducing an inert gas and the reducing gas into the chute, the refining furnace, the holding furnace, and the casting furnace, with the flow rate and pressure of the inert gas and the reducing gas introduced into the chute, the refining furnace, the holding furnace, and the casting furnace decreasing sequentially, and carrying out secondary impurity removal to obtain the oxygen-free copper pipe.

In S1, by reverse operation, the oxygen element content of the copper liquid in the shaft furnace is increased first, and the oxygen element content of the copper liquid is increased to be greater than 30 ppm, which may provide enough oxygen element for oxidation reaction with impurities to carry out primary impurity removal and ensure the removal effect of impurities. If the oxygen element content of the copper liquid in the shaft furnace is lower than 30 ppm, the impurity removal effect is poor, resulting in a high impurity content in the copper liquid, which increases the difficulty of impurity removal in the subsequent processing steps, and if the impurity removal ability in the subsequent processing steps is weak, it may lead to impurities in the final generated oxygen-free copper pipe still being higher than the target value, affecting the quality of the oxygen-free copper pipe.

**In** S2, the copper liquid in the shaft furnace was sequentially introduced into the chute, the refining furnace, the holding furnace, and the casting furnace. The temperature of the copper liquid of the chute, the refining furnace, the holding furnace, and the casting furnace decreased sequentially. The inert gas and the reducing gas were introduced into the chute, the refining furnace, the holding furnace, and the casting furnace. Oxygen element in the copper liquid were gradually reduced by the reducing gas as they pass through the chute, the refining furnace, the holding furnace, and the casting furnace in sequence. Impurities in the copper liquid were gradually reduced. The copper liquid underwent multi-step impurity removal to achieve precise control of the hydrogen removal and deoxygenation process, achieving secondary impurity removal and better controlling the impurities content in the copper liquid. The content of impurities will decrease when entering the next furnace after being removed in the previous furnace. Correspondingly, the required amount of the reducing gas may also be reduced, so that the flow rate and pressure of the inert gas and the reducing gas introduced into the chute, the refining furnace, the holding furnace, and the casting furnace sequentially decrease. The flow rate and pressure of the inert gas and the reducing gas which are sequentially decreased may help control the bubble overflow in the copper liquid, reduce the formation of gas pores, and also ensure that the effect of hydrogen removal and deoxygenation is within the set range throughout, and also help to control the stirring degree of the copper liquid, thereby ensuring the effective progress of the oxidation to form slag, improving the quality of the oxygen-free copper pipe produced by recycled copper, reducing energy consumption and improving process efficiency.

It should be noted that the reducing gas can react with the oxide in the copper liquid, and the content of the oxygen element in the copper liquid is adjusted by adjusting the concentration of the reducing gas in the shaft furnace. For example, the concentration of reducing gas is reduced by reducing the use of high-carbon fuels and replacing coal or coke with low-carbon fuels or clean energy. This can result in more oxygen element remaining in the copper liquid instead of being reduced by the reducing gas, thereby increasing the oxygen element content of the copper liquid in the shaft furnace to over 30 ppm. Of course, the oxygen element-containing gas may also be directly introduced to change the oxygen element content of the copper liquid.

Specifically, the concentration of the reducing gas in the shaft furnace, the chute, the refining furnace, the holding furnace, and the casting furnace is increased sequentially within a range of 2% to 5%. By sequentially increasing the concentration of the reducing gas, the impurity removal process may be more accurately controlled, and the problem of over-oxidation or insufficient oxidation may be avoided. If the concentration of the reducing gas is less than 2.0%, the lower reducing gas concentration may lead to a decrease in the reduction efficiency of impurities, the production cycle is prolonged, impurities in the reduced copper may not be effectively removed, thereby affecting the quality of the oxygen-free copper pipe. If the concentration of the reducing gas is greater than 5%, the high-concentration reducing gas may require more energy for heating and mixing, thereby increasing energy consumption. Using excessive reducing gas not only wastes resources, but also increases raw material costs.

Preferably, the concentration of the reducing gas in the shaft furnace is 2% to 3%, which increases the oxygen element content of the copper liquid in the shaft furnace to be greater than 30 ppm, so as to effectively remove the hydrogen element in the copper liquid. The hydrogen element content of the copper liquid is lower than the set value, which is less than 0.5 ppm, so that the hydrogen element content through the subsequent processing steps is more easily reduced to the target value, which is less than 0.3 ppm. The concentration of reducing gas in the chute is maintained at 3% to 4%. By sequentially increasing the concentration of reducing gas, the reducing atmosphere in the copper liquid may be precisely controlled, and the removal process of impurities in the copper liquid may be optimized. Among them, impurities in the copper liquid may be significantly reduced in the shaft furnace and the chute, which basically tends to meet the quality requirements of the oxygen-free copper pipe. While the subsequent refining furnace, holding furnace and casting furnace further remove impurities, but the effect is not very obvious. Therefore, the concentration of reducing gas in the subsequent refining furnace, holding furnace and casting furnace only needs to be sequentially increased within a range of 4% to 5%.

In order to make the inert gas and the reducing gas enter the copper liquid more uniformly, the chute, the refining furnace, the holding furnace and the casting furnace are all installed with gas permeable bricks. The appropriate number of gas permeable bricks may be selected according to the flow rate and pressure of the introduced inert gas and reducing gas, so that the inert gas and reducing gas are uniformly distributed in the copper liquid, thereby reducing the phenomenon of local supersaturation. When the flow rate and pressure of inert gas and reducing gas are high, more gas permeable bricks are needed to ensure uniform gas distribution; when the flow rate and pressure of inert gas and reducing gas are low, less gas permeable bricks are needed.

In this example, 7 gas permeable bricks were installed at the bottom of the chute, 6 gas permeable bricks were installed at the bottom of the refining furnace, 5 gas permeable bricks were installed at the bottom of the holding furnace, 4 gas permeable bricks were installed at the bottom of the casting furnace. The number of gas permeable bricks is adjusted according to actual production requirements and product quality feedback, saving energy and costs while maintaining production efficiency.

It should be noted that suitable numbers of gas permeable bricks such as 2, 3, 4, 5, 6, 7, 8, and 9 may also be installed at the bottom of the chute, the refining furnace, the holding furnace, and the casting furnace.

It should be understood that in other examples, gas permeable bricks of different sizes may also be selected to adapt to the flow rate and pressure of the inert gas and reducing gas.

Further, the flow rate of the inert gas and reducing gas introduced into the chute, the refining furnace, the holding furnace, the casting furnace is decreased sequentially within a range of 10 L/min to 30 L/min, and the pressure of the inert gas and reducing gas is decreased sequentially within a range of 0.1 MPa to 0.5 MPa. This ensures that the effect of hydrogen removal and deoxidation in the chute, the refining furnace, the holding furnace and the casting furnace is consistently maintained within the specified range while reducing energy consumption. If the flow rate of the inert gas and reducing gas is greater than 30 L/min, excessively high flow rate may lead to unstable flow of the inert gas and reducing gas, resulting in unstable preparation process of the oxygen-free copper pipe, which also means that more energy is required to provide the inert gas and reducing gas, which increases the production cost. If the flow rate of the inert gas and reducing gas is less than 10 L/min, the effect of hydrogen removal and deoxidation may not reach the specified range, resulting in poor quality of the produced oxygen-free copper pipe. If the pressure of the inert gas and reducing gas is greater than 0.5 MPa, the inert gas and reducing gas are caused to pass through the copper liquid too quickly, which reduces the contact time of the inert gas and reducing gas with the copper liquid, and affects the effect of hydrogen removal and deoxidation. If the pressure of the inert gas and reducing gas is less than 0.1 MPa, the inert gas and reducing gas may not effectively enter the copper liquid, thereby reducing the effect of hydrogen removal and deoxidation.

Step S2 may be refined into the following steps: firstly, blowing the inert gas and reducing gas into the chute from the bottom of the chute through each gas permeable brick, wherein the flow rate of the inert gas and reducing gas blown through each gas permeable brick is 25 L/min to 30 L/min, the pressure of the inert gas and reducing gas is 0.3 MPa to 0.5 MPa, so that the oxygen element content of the copper liquid in the chute is less than 20 ppm, and the hydrogen element content is less than 0.4 ppm, which can ensure efficient removal of impurities.

Secondly, since the oxygen element content in the copper liquid entering the refining furnace is lower than that in the copper liquid entering the chute, the inert gas and reducing gas are blown into the refining furnace from the bottom of the refining furnace through each air permeable brick, wherein the flow rate of the inert gas and reducing gas blown through each air permeable brick is 20 L/min to 25 L/min, the pressure of the inert gas and reducing gas is 0.2 MPa to 0.3 MPa, so that the oxygen element content of the copper liquid in the refining furnace is less than 10 ppm and the hydrogen element content is less than 0.4 ppm, which meets the requirements for oxygen removal, effectively controls the use of inert gas and reducing gas, and balances production efficiency and cost-effectiveness.

Subsequently, since the oxygen element content in the copper liquid entering the holding furnace is lower than that in the copper liquid entering the refining furnace, the inert gas and reducing gas are blown into the holding furnace from the bottom of the holding furnace through each air permeable brick, wherein the flow rate of the inert gas and reducing gas blown through each air permeable brick is 15 L/min to 20 L/min, the pressure of the inert gas and reducing gas is 0.15 MPa to 0.2 MPa, so that the oxygen element content of the copper liquid in the holding furnace is less than 5 ppm and the hydrogen element content is less than 0.3 ppm, which meets the requirements for oxygen removal, effectively controls the use of inert gas and reducing gas, avoids excessive treatment and energy waste, and further balances production efficiency and cost-effectiveness.

Finally, since the oxygen element content in the copper liquid entering the casting furnace is lower than that in the copper liquid entering the holding furnace, the inert gas and reducing gas are blown into the casting furnace from the bottom of the casting furnace through each air permeable brick, wherein the flow rate of the inert gas and reducing gas blown through each air permeable brick is 10 L/min to 15 L/min, the pressure of the inert gas and reducing gas is 0.1 MPa to 0.15 MPa, so that the oxygen element content of the copper liquid in the casting furnace is less than 5 ppm and the hydrogen element content is less than 0.3 ppm, which meets the requirements for oxygen removal, effectively controls the use of inert gas and reducing gas, avoids excessive treatment and energy waste, and further balances production efficiency and cost-effectiveness. The low-oxygen element and the low-hydrogen element environment continues to be maintained in the final processing stage before casting to ensure that the purity of the copper liquid will not decrease due to external factors during the process of entering the mold and solidification molding, and the quality of the copper pipe is improved.

It should be noted that the flow rate and pressure of the inert gas and reducing gas in the chute, the refining furnace, the holding furnace, and the casting furnace are not necessarily as described above. Other values may also be adopted as long as the contents of hydrogen element and oxygen element in the final copper liquid are lower than the set value.

Further, in the step S1, the set temperature of the copper liquid in the shaft furnace is maintained at 1200±20°C, in the step S2, the temperature of the copper liquid in the chute is maintained at 1190±20°C, the temperature of the copper liquid in the refining furnace may also be 1180±20°C, the temperature of the copper liquid in the holding furnace may also be 1170±20°C, and the temperature of the copper liquid in the casting furnace may be 1160±10°C, and the temperature of the copper liquid in the shaft furnace, the chute, the refining furnace, the holding furnace and the casting furnace needs to gradually decrease within a range of 1220°C to 1150°C. In the shaft furnace with higher temperature, it is beneficial to quick reaction to remove most impurities in the copper liquid. The temperature of the copper liquid gradually decreases and the copper liquid enters the chute. As the temperature of the copper liquid decreases, the solubility of impurities will decrease, and they are more inclined to precipitate out of the copper liquid and react with the oxygen element to form oxides which are easy to separate, which helps the oxide precipitation, so that these oxides may be removed more thoroughly, and the purity of copper is improved. The step-by-step adjustment process flow is beneficial to finely control the chemical composition and physical state of the copper liquid, and reduce the influence of thermal stress on the microstructure of the copper liquid. The finally produced copper material has more uniform composition, less inclusions and more excellent physical properties. If the temperature of the copper liquid is higher than 1220°C, the excessively high temperature may promote the dissolution of impurities and affect the purity of the oxygen-free copper pipe. If the temperature of the copper liquid is lower than 1150°C, the excessively low temperature of the copper liquid may slow down the oxidation process of impurities, reduce the slag forming efficiency, and result in a higher impurity content in the oxygen-free copper pipe.

Preferably, the reducing gas is CO, which is a powerful reducing agent that can react with the oxides in the copper liquid to reduce them to metal copper, thereby effectively removing the oxides in the copper liquid and improving the purity of the recycled copper. The CO reduction process is relatively mild, and will not drastically change the properties of the copper liquid, which is conducive to keeping the copper liquid stable, facilitating subsequent refining, casting and other processing steps, and improving the efficiency and product quality of the entire production chain. Compared with other noble metal catalysts or complex chemical reagents, CO as a common industrial gas, is relatively low in cost, and it may effectively control the production cost by using CO as the reducing agent. Finally, the presence of CO may also reduce the solubility of the hydrogen element in the copper liquid and promote the hydrogen element to precipitate in the form of bubbles, which helps to efficiently remove hydrogen element, reduces the hydrogen embrittlement phenomenon of the copper product, and improves the mechanical properties and service life thereof.

It should be noted that composition of impurities other than hydrogen element and oxygen element in the recycled copper is shown in Table 1:

**Table 1 The content of elements other than hydrogen element and oxygen element in impurities of recycled copper**

| Cu(%) | Impurity Content/Group Total Content (ppm), not greater than | | | | | | | | |
|---|---|---|---|---|---|---|---|---|---|
| Not less than | As Arsenic | Sb Antimony | Bi Bismuth | Fe Iron | Pb Lead | Sn Tin | Ni Nickel | Zn Zinc | S Sulfur |
| 99.98 | 40 | 40 | 20 | 150 | 90 | 60 | 120 | 150 | 100 |

In order to remove elements other than hydrogen element and oxygen element in impurities of the recycled copper, the temperature of the copper liquid in the shaft furnace is preferably 1200°C, the concentration of CO through the shaft furnace is 2%, impurities such as Bi, Sb, As, Fe, Ni, Pb, Sn, S and Zn are removed by oxidation slagging, and the composition of the obtained recycled copper is as shown in Table 2:

**Table 2 The content of elements other than hydrogen element and oxygen element in impurities of the copper liquid in the shaft furnace**

| Cu(%) Not less than | Impurity Content/Group Total Content (ppm), not greater than | | | | | | | | |
|---|---|---|---|---|---|---|---|---|---|
| | As Arsenic | Sb Antimony | Bi Bismuth | Fe Iron | Pb Lead | Sn Tin | Ni Nickel | Zn Zinc | S Sulfur |
| 99.98 | 20 | 20 | 20 | 50 | 50 | 50 | 50 | 50 | 50 |

By regulating the concentration of CO in the chute to 3.0%, the temperature of the copper liquid is preferably 1190°C, impurities such as Bi, Sb, As, Fe, Ni, Pb, Sn, S and Zn are further removed by oxidation slagging, and the composition of the obtained recycled copper is as shown in Table 3:

**Table 3 The content of elements other than hydrogen element and oxygen element in impurities of the copper liquid in the chute**

| Cu(%) Not less than | Impurity Content/Group Total Content (ppm), not greater than | | | | | | | | |
|---|---|---|---|---|---|---|---|---|---|
| | As Arsenic | Sb Antimony | Bi Bismuth | Fe Iron | Pb Lead | Sn Tin | Ni Nickel | Zn Zinc | S Sulfur |
| 99.98 | 5 | 5 | 5 | 10 | 10 | 10 | 10 | 10 | 10 |

According to the present process, after the copper liquid is processed through the chute, the content of impurities such as Bi, Sb, As, Fe, Ni, Pb, Sn, S, and Zn has met the quality requirement of the oxygen-free copper pipe. In order to further optimize the quality of the oxygen-free copper pipe, the subsequent copper liquid is further processed through the refining furnace, the holding furnace, and the casting furnace, however, the content of impurities such as Bi, Sb, As, Fe, Ni, Pb, Sn, S and Zn changes slightly, and the detection is quite difficult. Therefore, it is no longer recorded through the table.

Then, by regulating the concentration of CO in the refining furnace to 3.5%, the temperature of the copper liquid is preferably 1180°C, and impurities such as Bi, Sb, As, Fe, Ni, Pb, Sn, S and Zn are further removed by oxidation slagging.

Then, by regulating the concentration of CO in the holding furnace to 4%, the temperature of the copper liquid is preferably 1170°C, and impurities such as Bi, Sb, As, Fe, Ni, Pb, Sn, S and Zn are further removed by oxidation slagging.

Finally, by regulating the concentration of CO in the casting furnace to 4.5%, the temperature of the copper liquid is preferably 1160°C, and impurities such as Bi, Sb, As, Fe, Ni, Pb, Sn, S and Zn are further removed by oxidation slagging.

Through the above steps, gradual cooling and stepwise refining of the copper liquid may be achieved. The high-temperature section is carried out in the refining furnace, which is conducive to the rapid reaction to remove most of the impurities. The temperature gradually decreases and the copper liquid enters the holding furnace, which is helpful for impurity precipitation and further purification. Finally, a lower temperature is maintained in the casting furnace, which helps stabilize the copper liquid composition and reduce the casting defects.

It should be noted that the reducing gas concentration described herein refers to a volume ratio, which is obtained by measuring and calculating the volume occupied by the reducing gas in the shaft furnace, the chute, the refining furnace, the holding furnace and the casting furnace. The content of hydrogen element, oxygen element, impurities, etc. mentioned herein refers to the mass ratio, which is determined by measuring and calculating the mass of hydrogen element, oxygen element and impurities in the copper liquid.

Other contents not described in this example can be referred to the foregoing examples.

### Example 3:

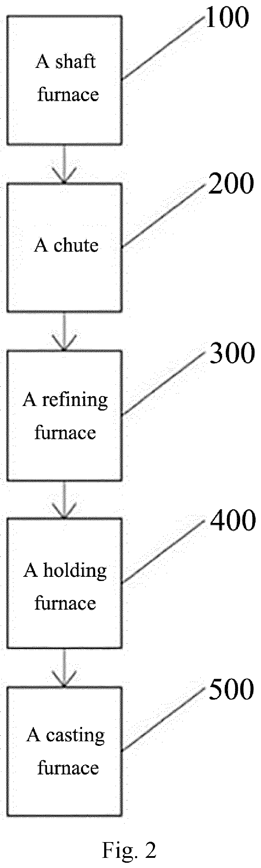

As shown in FIG. 2, the present application provides an apparatus for preparing an oxygen-free copper pipe by utilizing recycled copper, including a shaft furnace 100, a chute 200, a refining furnace 300, a holding furnace 400 and a casting furnace 500, wherein bottoms of the chute 200, the refining furnace 300, the holding furnace 400 and the casting furnace 500 are all provided with gas permeable bricks for blowing in the inert gas and reducing gas, so as to realize the method for preparing oxygen-free copper pipe by utilizing recycled copper in the above examples. The appropriate number of the gas permeable bricks may be selected according to the flow rate and pressure of the inert gas and reducing gas introduced into the chute 200, the refining furnace 300, the holding furnace 400 and the casting furnace 500.

Other contents not described in this example can be referred to the foregoing examples.

### Example 4:

In this example, a method for preparing a corrosion-resistant copper pipe by utilizing recycled copper is provided. The content of impurities can be effectively reduced by casting the copper liquid obtained from the casting furnace of the method for preparing oxygen-free copper pipes by utilizing recycled copper, thereby eliminating cuprous oxide and reducing the potential difference between grain boundaries and grain interiors. The corrosion-resistant copper pipes have excellent resistance to ant hole corrosion. A phosphorus source is added to the copper liquid, wherein the phosphorus element may significantly improve the corrosion resistance of the copper pipe, especially when used in humid, acidic, alkaline or seawater environments. The phosphorus element may also react with the oxygen element in the copper liquid to form phosphorus oxides, which are volatile and may escape at high temperature, thereby reducing the oxygen content in the copper alloy. In addition to deoxidation, phosphorus element may react with other elements in the impurities to form compounds that are easy to separate from the copper liquid, thereby further achieving the purpose of purifying the copper liquid. The casting temperature of the copper liquid is 1165°C ± 5°C, which ensures that the copper liquid has good fluidity, helps reduce casting defects, ensures uniform distribution of the alloy such as phosphorus. Then, the primary cooling water flow rate of the crystallizer is 45 L/min to 55 L/min, which may not only effectively control the cooling rate of the copper liquid, and avoid internal stress and cracks caused by too rapid cooling, but also ensure the rapid curing of the corrosion-resistant copper pipe, and improve the production efficiency. The corrosion-resistant copper pipe of Example 1 was obtained by adopting a traction process, in which an initial casting traction speed was 100 mm/min, turning on secondary cooling water after pulling out the ingot, gradually increasing the casting traction speed within a range of 100 mm/min to 350 mm/min, and casting. This is conducive to uniform heat dissipation, reduce uneven deformation and internal stress accumulation, ensure the dimensional accuracy and surface quality of the corrosion-resistant copper pipe, facilitate the uniform plastic deformation of the material, and improve the mechanical properties and pressure resistance ability of the corrosion-resistant copper pipe.

Preferably, the casting traction speed was gradually increased from 100 mm/min, 170 mm/min, 200 mm/min, 250 mm/min, 300 mm/min, 330 mm/min, and 350 mm/min.

Among them, the traction process is: stretching, stopping, retracting for the first time, stopping, retracting for the second time, stopping, and stretching in the next cycle. The stress concentration inside the corrosion-resistant copper pipe may be reduced through periodic stretching and retracting actions, thus avoiding damage to the corrosion-resistant copper pipe caused by continuous stretching. Two retracting and stopping steps may also ensure that the copper liquid distribution is more uniform, so as to improve the structural strength and quality of the corrosion-resistant copper pipe, and also ensure the service life of the corrosion-resistant copper pipe.

It should be understood that, in other examples, the traction process may also be: common stretching, stopping, retracting, stopping, and stretching in the next cycle, with simpler steps and more efficient production.

It should be noted that the pre-alloyed phosphorus copper ingot or the phosphorus copper wire may be directly added into the molten copper liquid to make the copper pipe contain phosphorus. Of course, phosphorus copper particles or powder additives may also be used, which can be directly sprinkled into the copper liquid. Additionally, the copper alloy master alloy with high phosphorus content may also be used, which is melted and added to the copper liquid. Of course, the method of phosphorus addition is not limited thereto.

## Claims

1. A method for preparing a corrosion-resistant copper pipe by utilizing recycled copper, **characterized in** comprising the following steps:
S1: heating a copper liquid derived from recycled copper in a shaft furnace to a set temperature, adjusting a concentration of a reducing gas in the shaft furnace to increase an oxygen element content of the copper liquid in the shaft furnace to be greater than 30 ppm, and carrying out primary impurity removal;
S2: introducing the copper liquid in the shaft furnace sequentially into a chute, a refining furnace, a holding furnace, and a casting furnace, with the temperature of the copper liquid in the chute, the refining furnace, the holding furnace, and the casting furnace decreasing sequentially, introducing an inert gas and the reducing gas into the chute, the refining furnace, the holding furnace, and the casting furnace, with the flow rate and pressure of the inert gas and the reducing gas introduced into the chute, the refining furnace, the holding furnace, and the casting furnace decreasing sequentially, and carrying out secondary impurity removal;
S3: adding a phosphorus source into the copper liquid in the casting furnace, with a casting temperature of the copper liquid of 1165°C±5°C and a primary cooling water flow rate of a crystallizer of 45 L/min to 55 L/min, adopting a traction process, in which an initial casting traction speed is 100 mm/min, turning on secondary cooling water after pulling out the ingot, gradually increasing the casting traction speed within a range of 100 mm/min to 350 mm/min, and obtaining a corrosion-resistant copper pipe.

2. The method for preparing a corrosion-resistant copper pipe by utilizing recycled copper according to claim 1, **characterized in that** the volume concentration of the reducing gas in the shaft furnace, the chute, the refining furnace, the holding furnace and the casting furnace is increased sequentially within a range of 2% to 5%.

3. The method for preparing a corrosion-resistant copper pipe by utilizing recycled copper according to claim 2, **characterized in that** the volume concentration of the reducing gas in the shaft furnace is 2% to 3%, the volume concentration of the reducing gas in the chute is maintained at 3% to 4%, and the volume concentration of the reducing gas in the refining furnace, the holding furnace and the casting furnace is increased sequentially within a range of 4% to 5%.

4. The method for preparing a corrosion-resistant copper pipe by utilizing recycled copper according to claim 1, **characterized in that** the flow rate of the inert gas and the reducing gas introduced into the chute, the refining furnace, the holding furnace, and the casting furnace is decreased sequentially within a range of 10 L/min to 30 L/min, and the pressure of the inert gas and the reducing gas introduced into the chute, the refining furnace, the holding furnace, and the casting furnace is decreased sequentially within a range of 0.1 MPa to 0.5 MPa.

5. The method for preparing a corrosion-resistant copper pipe by utilizing recycled copper according to claim 4, **characterized in that**
the flow rate of the inert gas and the reducing gas introduced into the chute is 25 L/min to 30 L/min, the pressure of the inert gas and the reducing gas introduced into the chute is 0.3 MPa to 0.5 MPa, so that the oxygen element content of the copper liquid in the chute is less than 20 ppm, and a hydrogen element content is less than 0.4 ppm;
the flow rate of the inert gas and the reducing gas introduced into the refining furnace is 20 L/min to 25 L/min, the pressure of the inert gas and the reducing gas introduced into the refining furnace is 0.2 MPa to 0.3 MPa, so that the oxygen element content of the copper liquid in the refining furnace is less than 10 ppm, and the hydrogen element content is less than 0.4 ppm;
the flow rate of the inert gas and the reducing gas introduced into the holding furnace is 15 L/min to 20 L/min, the pressure of the inert gas and the reducing gas introduced into the holding furnace is 0.15 MPa to 0.2 MPa, so that the oxygen element content of the copper liquid in the holding furnace is less than 5 ppm, and the hydrogen element content is less than 0.3 ppm;
the flow rate of the inert gas and the reducing gas introduced into the casting furnace is 10 L/min to 15 L/min, the pressure of the inert gas and the reducing gas introduced into the casting furnace is 0.1 MPa to 0.15 MPa, so that the oxygen element content of the copper liquid in the casting furnace is less than 5 ppm, and the hydrogen element content is less than 0.3 ppm.

6. The method for preparing a corrosion-resistant copper pipe by utilizing recycled copper according to claim 1, **characterized in that** the temperature of the copper liquid in the shaft furnace, the chute, the refining furnace, the holding furnace and the casting furnace is decreased sequentially within a range of 1220°C to 1150°C.

7. The method for preparing a corrosion-resistant copper pipe by utilizing recycled copper according to claim 6, **characterized in that** the copper liquid set temperature of the shaft furnace is maintained at 1200±20°C, the copper liquid temperature in the chute is maintained at 1190±20°C, the copper liquid temperature in the refining furnace is 1180±20°C, the copper liquid temperature in the holding furnace is 1170±20°C, and the copper liquid temperature in the casting furnace is 1165±5°C.

8. The method for preparing a corrosion-resistant copper pipe by utilizing recycled copper according to claim 1, **characterized in that**
impurities in the copper liquid in the shaft furnace after the primary impurity removal through the shaft furnace include: arsenic element ≤ 20 ppm, antimony element ≤ 20 ppm, bismuth element ≤ 20 ppm, iron element ≤ 50 ppm, lead element ≤ 50 ppm, tin element ≤ 50 ppm, nickel element ≤ 50 ppm, zinc element ≤ 50 ppm, and sulfur element ≤ 50 ppm;
impurities in the copper liquid in the chute after treatment through the chute include: arsenic element ≤ 5 ppm, antimony element ≤ 5 ppm, bismuth element ≤ 5 ppm, iron element ≤ 10 ppm, lead element ≤ 10 ppm, tin element ≤ 10 ppm, nickel element ≤ 10 ppm, zinc element ≤ 10 ppm, and sulfur element ≤ 10 ppm.

9. The method for preparing a corrosion-resistant copper pipe by utilizing recycled copper according to claim 1, **characterized in that** the corrosion-resistant copper pipe has an oxygen element content of less than 5 ppm, a hydrogen element content of less than 0.3 ppm, a phosphorus element content of 0.1% to 0.3%, and a balance of copper element, wherein the term "%" refers to the mass ratio.

10. The method for preparing a corrosion-resistant copper pipe by utilizing recycled copper according to claim 9, **characterized in that** the phosphorus element content is 0.1% to 0.2%, wherein the term "%" refers to the mass ratio.

## Patentansprüche

1. Verfahren zur Herstellung eines korrosionsbeständigen Kupferrohrs unter Verwendung von Recyclingkupfer, **dadurch gekennzeichnet, dass** es die folgenden Schritte umfasst:
S1: Erhitzen einer aus Recyclingkupfer stammenden Kupferschmelze in einem Schachtofen auf eine vorgegebene Temperatur, Einstellen einer Konzentration eines Reduktionsgases im Schachtofen, um einen Sauerstoffgehalt der Kupferschmelze im Schachtofen auf mehr als 30 ppm zu erhöhen, und Durchführen einer ersten Verunreinigungsentfernung;
S2: Einleiten der Kupferschmelze aus dem Schachtofen nacheinander in eine Rinne, einen Raffinierofen, einen Warmhalteofen und einen Gießofen, wobei die Temperatur der Kupferschmelze in der Rinne, dem Raffinierofen, dem Warmhalteofen und dem Gießofen nacheinander abnimmt, Einleiten eines Inertgases und des Reduktionsgases in die Rinne, den Raffinierofen, den Warmhalteofen und den Gießofen, wobei die Durchflussmenge und der Druck des in die Rinne, den Raffinierofen, den Warmhalteofen und den Gießofen eingeleiteten Inertgases und Reduktionsgases nacheinander abnehmen, und Durchführen einer zweiten Verunreinigungsentfernung;
S3: Zugeben einer Phosphorquelle in die Kupferschmelze im Gießofen, bei einer Gießtemperatur der Kupferschmelze von 1165 °C ± 5 °C und einer primären Kühlwasserdurchflussmenge des Kristallisators von 45 L/min bis 55 L/min, Anwenden eines Ziehverfahrens, bei dem eine anfängliche Gießziehgeschwindigkeit 100 mm/min beträgt, Einschalten des Sekundärkühlwassers nach dem Herausziehen des Gussblocks, schrittweises Erhöhen der Gießziehgeschwindigkeit in einem Bereich von 100 mm/min bis 350 mm/min, und Erhalten eines korrosionsbeständigen Kupferrohrs.

2. Verfahren zur Herstellung eines korrosionsbeständigen Kupferrohrs unter Verwendung von Recyclingkupfer nach Anspruch 1, **dadurch gekennzeichnet, dass** die Volumenkonzentration des Reduktionsgases im Schachtofen, der Rinne, dem Raffinierofen, dem Warmhalteofen und dem Gießofen nacheinander in einem Bereich von 2 % bis 5 % erhöht wird.

3. Verfahren nach Anspruch 2, **dadurch gekennzeichnet, dass** die Volumenkonzentration des Reduktionsgases im Schachtofen 2 % bis 3 % beträgt, die Volumenkonzentration des Reduktionsgases in der Rinne bei 3 % bis 4 % gehalten wird und die Volumenkonzentration des Reduktionsgases im Raffinierofen, im Warmhalteofen und im Gießofen nacheinander in einem Bereich von 4 % bis 5 % erhöht wird.

4. Verfahren nach Anspruch 1, **dadurch gekennzeichnet, dass** die Durchflussmenge des in die Rinne, den Raffinierofen, den Warmhalteofen und den Gießofen eingeleiteten Inertgases und Reduktionsgases nacheinander in einem Bereich von 10 L/min bis 30 L/min abnimmt, und der Druck des in die Rinne, den Raffinierofen, den Warmhalteofen und den Gießofen eingeleiteten Inertgases und Reduktionsgases nacheinander in einem Bereich von 0,1 MPa bis 0,5 MPa abnimmt.

5. Verfahren nach Anspruch 4, **dadurch gekennzeichnet, dass**
die Durchflussmenge des in die Rinne eingeleiteten Inertgases und Reduktionsgases 25 L/min bis 30 L/min beträgt und der Druck des in die Rinne eingeleiteten Inertgases und Reduktionsgases 0,3 MPa bis 0,5 MPa beträgt, so dass der Sauerstoffgehalt der Kupferschmelze in der Rinne weniger als 20 ppm und der Wasserstoffgehalt weniger als 0,4 ppm beträgt;
die Durchflussmenge des in den Raffinierofen eingeleiteten Inertgases und Reduktionsgases 20 L/min bis 25 L/min beträgt und der Druck des in den Raffinierofen eingeleiteten Inertgases und Reduktionsgases 0,2 MPa bis 0,3 MPa beträgt, so dass der Sauerstoffgehalt der Kupferschmelze im Raffinierofen weniger als 10 ppm und der Wasserstoffgehalt weniger als 0,4 ppm beträgt;
die Durchflussmenge des in den Warmhalteofen eingeleiteten Inertgases und Reduktionsgases 15 L/min bis 20 L/min beträgt und der Druck des in den Warmhalteofen eingeleiteten Inertgases und Reduktionsgases 0,15 MPa bis 0,2 MPa beträgt, so dass der Sauerstoffgehalt der Kupferschmelze im Warmhalteofen weniger als 5 ppm und der Wasserstoffgehalt weniger als 0,3 ppm beträgt;
die Durchflussmenge des in den Gießofen eingeleiteten Inertgases und Reduktionsgases 10 L/min bis 15 L/min beträgt und der Druck des in den Gießofen eingeleiteten Inertgases und Reduktionsgases 0,1 MPa bis 0,15 MPa beträgt, so dass der Sauerstoffgehalt der Kupferschmelze im Gießofen weniger als 5 ppm und der Wasserstoffgehalt weniger als 0,3 ppm beträgt.

6. Verfahren nach Anspruch 1, **dadurch gekennzeichnet, dass** die Temperatur der Kupferschmelze im Schachtofen, der Rinne, dem Raffinierofen, dem Warmhalteofen und dem Gießofen nacheinander in einem Bereich von 1220 °C bis 1150 °C abnimmt.

7. Verfahren nach Anspruch 6, **dadurch gekennzeichnet, dass** die vorgegebene Temperatur der Kupferschmelze im Schachtofen bei 1200 ± 20 °C gehalten wird, die Temperatur der Kupferschmelze in der Rinne bei 1190 ± 20 °C gehalten wird, die Temperatur der Kupferschmelze im Raffinierofen 1180 ± 20 °C beträgt, die Temperatur der Kupferschmelze im Warmhalteofen 1170 ± 20 °C beträgt und die Temperatur der Kupferschmelze im Gießofen 1165 ± 5 °C beträgt.

8. Verfahren nach Anspruch 1, **dadurch gekennzeichnet, dass**
die Verunreinigungen in der Kupferschmelze im Schachtofen nach der ersten Verunreinigungsentfernung durch den Schachtofen Folgendes umfassen: Arsen ≤ 20 ppm, Antimon ≤ 20 ppm, Wismut ≤ 20 ppm, Eisen ≤ 50 ppm, Blei ≤ 50 ppm, Zinn ≤ 50 ppm, Nickel ≤ 50 ppm, Zink ≤ 50 ppm und Schwefel ≤ 50 ppm;
die Verunreinigungen in der Kupferschmelze in der Rinne nach der Behandlung durch die Rinne Folgendes umfassen: Arsen ≤ 5 ppm, Antimon ≤ 5 ppm, Wismut ≤ 5 ppm, Eisen ≤ 10 ppm, Blei ≤ 10 ppm, Zinn ≤ 10 ppm, Nickel ≤ 10 ppm, Zink ≤ 10 ppm und Schwefel ≤ 10 ppm.

9. Verfahren nach Anspruch 1, **dadurch gekennzeichnet, dass** das korrosionsbeständige Kupferrohr einen Sauerstoffgehalt von weniger als 5 ppm, einen Wasserstoffgehalt von weniger als 0,3 ppm, einen Phosphorgehalt von 0,1 % bis 0,3 % und als Rest Kupfer aufweist, wobei sich der Begriff "%" auf das Massenverhältnis bezieht.

10. Verfahren nach Anspruch 9, **dadurch gekennzeichnet, dass** der Phosphorgehalt 0,1 % bis 0,2 % beträgt, wobei sich der Begriff "%" auf das Massenverhältnis bezieht.

## Revendications

1. Procédé de préparation d'un tube en cuivre résistant à la corrosion en utilisant du cuivre recyclé, **caractérisé en ce qu'**il comprend les étapes suivantes :
S1 : chauffer un bain de cuivre issu de cuivre recyclé dans un four à puits à une température définie, ajuster une concentration d'un gaz réducteur dans le four à puits pour augmenter une teneur en élément oxygène du bain de cuivre dans le four à puits à plus de 30 ppm, et effectuer une première élimination des impuretés ;
S2 : introduire le bain de cuivre du four à puits successivement dans une goulotte, un four d'affinage, un four de maintien et un four de coulée, la température du bain de cuivre dans la goulotte, le four d'affinage, le four de maintien et le four de coulée diminuant successivement, introduire un gaz inerte et le gaz réducteur dans la goulotte, le four d'affinage, le four de maintien et le four de coulée, le débit et la pression du gaz inerte et du gaz réducteur introduits dans la goulotte, le four d'affinage, le four de maintien et le four de coulée diminuant successivement, et effectuer une deuxième élimination des impuretés ;
S3 : ajouter une source de phosphore dans le bain de cuivre dans le four de coulée, avec une température de coulée du bain de cuivre de 1165 °C ± 5 °C et un débit d'eau de refroidissement primaire d'un cristalliseur de 45 L/min à 55 L/min, mettre en œuvre un procédé de traction, dans lequel une vitesse de traction de coulée initiale est de 100 mm/min, mettre en marche l'eau de refroidissement secondaire après avoir tiré le lingot, augmenter progressivement la vitesse de traction de coulée dans une plage de 100 mm/min à 350 mm/min, et obtenir un tube en cuivre résistant à la corrosion.

2. Procédé de préparation d'un tube en cuivre résistant à la corrosion en utilisant du cuivre recyclé selon la revendication 1, **caractérisé en ce que** la concentration volumique du gaz réducteur dans le four à puits, la goulotte, le four d'affinage, le four de maintien et le four de coulée augmente successivement dans une plage de 2 % à 5 %.

3. Procédé de préparation d'un tube en cuivre résistant à la corrosion en utilisant du cuivre recyclé selon la revendication 2, **caractérisé en ce que** la concentration volumique du gaz réducteur dans le four à puits est de 2% à 3%, la concentration volumique du gaz réducteur dans la goulotte est maintenue entre 3 % et 4 %, et la concentration volumique du gaz réducteur dans le four d'affinage, le four de maintien et le four de coulée augmente successivement dans une plage de 4 % à 5 %.

4. Procédé de préparation d'un tube en cuivre résistant à la corrosion en utilisant du cuivre recyclé selon la revendication 1, **caractérisé en ce que** le débit du gaz inerte et du gaz réducteur introduits dans la goulotte, le four d'affinage, le four de maintien et le four de coulée diminue successivement dans une plage de 10 L/min à 30 L/min, et la pression du gaz inerte et du gaz réducteur introduits dans la goulotte, le four d'affinage, le four de maintien et le four de coulée diminue successivement dans une plage de 0,1 MPa à 0,5 MPa.

5. Procédé de préparation d'un tube en cuivre résistant à la corrosion en utilisant du cuivre recyclé selon la revendication 4, **caractérisé en ce que** :
le débit du gaz inerte et du gaz réducteur introduits dans la goulotte est de 25 L/min à 30 L/min, la pression du gaz inerte et du gaz réducteur introduits dans la goulotte est de 0,3 MPa à 0,5 MPa, de sorte que la teneur en élément oxygène du bain de cuivre dans la goulotte est inférieure à 20 ppm, et une teneur en élément hydrogène est inférieure à 0,4 ppm ;
le débit du gaz inerte et du gaz réducteur introduits dans le four d'affinage est de 20 L/min à 25 L/min, la pression du gaz inerte et du gaz réducteur introduits dans le four d'affinage est de 0,2 MPa à 0,3 MPa, de sorte que la teneur en élément oxygène du bain de cuivre dans le four d'affinage est inférieure à 10 ppm, et la teneur en élément hydrogène est inférieure à 0,4 ppm ;
le débit du gaz inerte et du gaz réducteur introduits dans le four de maintien est de 15 L/min à 20 L/min, la pression du gaz inerte et du gaz réducteur introduits dans le four de maintien est de 0,15 MPa à 0,2 MPa, de sorte que la teneur en élément oxygène du bain de cuivre dans le four de maintien est inférieure à 5 ppm, et la teneur en élément hydrogène est inférieure à 0,3 ppm ;
le débit du gaz inerte et du gaz réducteur introduits dans le four de coulée est de 10 L/min à 15 L/min, la pression du gaz inerte et du gaz réducteur introduits dans le four de coulée est de 0,1 MPa à 0,15 MPa, de sorte que la teneur en élément oxygène du bain de cuivre dans le four de coulée est inférieure à 5 ppm, et la teneur en élément hydrogène est inférieure à 0,3 ppm.

6. Procédé de préparation d'un tube en cuivre résistant à la corrosion en utilisant du cuivre recyclé selon la revendication 1, **caractérisé en ce que** la température du bain de cuivre dans le four à puits, la goulotte, le four d'affinage, le four de maintien et le four de coulée diminue successivement dans une plage de 1220 °C à 1150 °C.

7. Procédé de préparation d'un tube en cuivre résistant à la corrosion en utilisant du cuivre recyclé selon la revendication 6, **caractérisé en ce que** la température définie du bain de cuivre du four à puits est maintenue à 1200 ± 20 °C, la température du bain de cuivre dans la goulotte est maintenue à 1190 ± 20 °C, la température du bain de cuivre dans le four d'affinage est de 1180 ± 20 °C, la température du bain de cuivre dans le four de maintien est de 1170 ± 20 °C, et la température du bain de cuivre dans le four de coulée est de 1165 ± 5 °C.

8. Procédé de préparation d'un tube en cuivre résistant à la corrosion en utilisant du cuivre recyclé selon la revendication 1, **caractérisé en ce que** :
les impuretés dans le bain de cuivre dans le four à puits après la première élimination des impuretés par le four à puits comprennent : élément arsenic ≤ 20 ppm, élément antimoine ≤ 20 ppm, élément bismuth ≤ 20 ppm, élément fer ≤ 50 ppm, élément plomb ≤ 50 ppm, élément étain ≤ 50 ppm, élément nickel ≤ 50 ppm, élément zinc ≤ 50 ppm, et élément soufre ≤ 50 ppm ;
les impuretés dans le bain de cuivre dans la goulotte après traitement par la goulotte comprennent : élément arsenic ≤ 5 ppm, élément antimoine ≤ 5 ppm, élément bismuth ≤ 5 ppm, élément fer ≤ 10 ppm, élément plomb ≤ 10 ppm, élément étain ≤ 10 ppm, élément nickel ≤ 10 ppm, élément zinc ≤ 10 ppm, et élément soufre ≤ 10 ppm.

9. Procédé de préparation d'un tube en cuivre résistant à la corrosion en utilisant du cuivre recyclé selon la revendication 1, **caractérisé en ce que** le tube en cuivre résistant à la corrosion présente une teneur en élément oxygène inférieure à 5 ppm, une teneur en élément hydrogène inférieure à 0,3 ppm, une teneur en élément phosphore de 0,1 % à 0,3 %, le reste étant constitué d'élément cuivre, le terme « % » désignant le rapport massique.

10. Procédé de préparation d'un tube en cuivre résistant à la corrosion en utilisant du cuivre recyclé selon la revendication 9, **caractérisé en ce que** la teneur en élément phosphore est de 0,1 % à 0,2 %, le terme « % » désignant le rapport massique.
